# EUROPÄISCHE PATENTSCHRIFT

(11) **EP 4 660 505 B1**
(45) Veröffentlichungstag und Bekanntmachung des Hinweises auf die Patenterteilung: **27.05.2026**
(21) Anmeldenummer: 24179592.1
(22) Anmeldetag: 03.06.2024
(51) Int. Cl.: F16L 19/12

(54) **FUNKTIONSMUTTER FÜR EINE ROHR- ODER SCHLAUCHVERSCHRAUBUNG UND ROHR- ODER SCHLAUCHVERSCHRAUBUNG**
FUNCTIONAL NUT FOR A PIPE OR HOSE CONNECTION AND PIPE OR HOSE CONNECTION
ÉCROU FONCTIONNEL POUR UN RACCORD VISSÉ DE TUYAU OU DE TUYAU ET RACCORD VISSÉ DE TUYAU OU DE TUYAU

(43) Veröffentlichungstag der Anmeldung: 10.12.2025
(73) Patentinhaber: Parker Hannifin EMEA S.à.r.l., 1163 Etoy (CH)
(72) Erfinder: Lauchner, Alexander, 33604 Bielefeld (DE); Udhöfer, Andreas, 33334 Gütersloh (DE)
(74) Vertreter: Feucker, Max Martin

(56) Entgegenhaltungen:
- EP-A1- 3 896 322
- EP-B1- 0 863 354

## Beschreibung

Die vorliegende Erfindung betrifft eine Rohr- oder Schlauchverschraubung mit einem Verschraubungskörper, der eine Bohrung zur Durchleitung eines Mediums und ein Außengewinde aufweist, sowie mit einer Funktionsmutter, die auf das Außengewinde des Verschraubungskörpers aufschraubbar ist. Die Funktionsmutter umfasst eine Überwurfmutter, die ein auf das Außengewinde des Verschraubungskörpers aufschraubbares Innengewinde aufweist, eine Schneidringanordnung sowie ein auf einem Außenumfang der Schneidringanordnung angeordnetes Ringelement. Zum Herstellen einer Schlauch- oder Rohrverbindung wird ein Rohr oder eine Schlaucharmatur durch die Funktionsmutter in eine entsprechende am Verschraubungskörper ausgebildete Aufnahme eingesteckt. Anschließend wird die Überwurfmutter aufgeschraubt und angezogen.

Die Schneidringanordnung kann einen Trägerring und einen separaten Schneidring aufweisen, wobei der Schneidring zumindest eine Schneidkante ausbildet. Es kann auch vorgesehen sein, dass der Trägerring zumindest eine Schneidkante ausbildet. Der Trägerring kann beispielsweise eine metallische Dichtung ausbilden. Hierbei kann insbesondere vorgesehen sein, dass der Trägerring in seinem hinteren, dem Verschraubungskörper abgewandten Bereich einen hinteren Innenkonus aufweist, in dem der separate Schneidring mit einem vorderen Außenkonus angeordnet ist. Insbesondere in diesem Zusammenhang kann vorgesehen sein, dass der Schneidring einen hinteren, dem Verschraubungskörper abgewandten Außenkonus aufweist, wobei zumindest während des Anziehens der Überwurfmutter ein an der Überwurfmutter ausgebildeter Innenkonus an dem hinteren Außenkonus des Schneidrings anliegt. Die Schneidringanordnung ist also insbesondere so ausgebildet, dass beim Anziehen der Überwurfmutter die Schneidkante des Schneidrings und gegebenenfalls die Schneidkante des Trägerrings in den Außenumfang des Rohres oder der Schlaucharmatur einschneidet.

Um die Schneidringanordnung insbesondere gegenüber dem Verschraubungskörper abzudichten, kann eine Dichtung an der Schneidringanordnung angebracht sein, die im angezogenen Zustand der Verschraubung insbesondere in einem durch den Verschraubungskörper ausgebildeten Innenkonus angeordnet ist. Die Dichtung kann dabei zwischen Verschraubungskörper und Rohr bzw. Schlaucharmatur oder zwischen Verschraubungskörper und der Schneidringanordnung angeordnet sein.

Vor der Herstellung der Rohr- bzw. Schlauchverbindung ist die auch als Patrone bezeichnete Schneidringanordnung in der Regel in die Überwurfmutter eingesetzt. Damit die Schneidringanordnung nicht versehentlich aus der Überwurfmutter herausfällt, ist es bekannt, Sicherungselemente aus einem kompressiven Material am Außenumfang der Schneidringanordnung anzuordnen. Die Sicherungselemente verhindern auch, dass die Schneidringanordnung beim Einstecken des Rohres durch die Funktionsmutter relativ zu der Funktionsmutter verschoben wird. Diese Sicherungselemente sind beispielsweise als Vorsprünge aus einem elastischen Material gebildet, die beim Einsetzen/Einpressen der Schneidringanordnung in die Überwurfmutter durch die Gewindespitzen des Innengewindes der Überwurfmutter komprimiert werden.

Es ist somit möglich, die Schneidringanordnung herstellerseitig vorzumontieren, sodass bei einer mehrteiligen Ausführung der Schneidringanordnung die Elemente der Schneidringanordnung am Montageort nicht versehentlich in der falschen Reihenfolge angeordnet werden.

Sofern eine maschinelle Vormontage der Funktionsmutter auf dem Rohr erfolgt, stellen die Sicherungsmittel sicher, dass die Überwurfmutter nach der maschinelle Vormontage nicht entlang des Rohres verschieblich ist.

So offenbart beispielsweise EP 3 896 322 A1, dass an einem auf die Schneidringanordnung aufgebrachten Dichtelement in Umfangsrichtung mehrere Vorsprünge hintereinander angeordnet sind, die ein unbeabsichtigtes Herausfallen der Schneidringanordnung aus der Überwurfmutter verhindern.

Es hat sich allerdings herausgestellt, dass die noppenartigen Vorsprünge am Dichtelement in einigen Fällen vom Innengewinde der Überwurfmutter beim Einpressen der Schneidringanordnung in die Überwurfmutter abgeschert werden, wodurch auch die die Schneidringanordnung in der Überwurfmutter sichernde Funktion der Vorsprünge verlorengeht.

Aufgabe der vorliegenden Erfindung ist es, die mit Bezug zum Stand der Technik geschilderten Nachteile zumindest teilweise zu beseitigen und insbesondere eine Funktionsmutter anzugeben, mit der noch sicherer verhindert wird, dass eine Schneidringanordnung aus der Überwurfmutter herausfällt bzw. herausgeschoben wird.

Eine mögliche Lösung für die Aufgabe ist mit der Funktionsmutter mit den Merkmalen des unabhängigen Anspruchs angegeben. Weitere Lösungen und vorteilhafte Weiterbildungen sind in der vorstehenden und nachfolgenden Beschreibung sowie in den Unteransprüchen angegeben, wobei einzelne Merkmale der vorteilhaften Weiterbildungen in technisch sinnvoller Weise miteinander kombinierbar sind.

Gelöst wird die Aufgabe insbesondere durch eine Funktionsmutter für eine Rohr- oder Schlauchverschraubung, wobei die Funktionsmutter eine Überwurfmutter, eine Schneidringanordnung und insbesondere auch ein Ringelement umfasst.

Die Überwurfmutter weist ein Innengewinde auf, mit welchem die Überwurfmutter auf das Außengewinde eines Verschraubungskörpers aufschraubbar ist. Die Schneidringanordnung ist so ausgebildet, dass ein Rohr oder eine Schlaucharmatur durch die Schneidringanordnung hindurch in eine entsprechende Aufnahme des Verschraubungskörpers einsteckbar ist, wobei die Überwurfmutter beim Anziehen auf die Schneidringanordnung einwirkt.

Der mindestens eine in radialer Richtung auslenkbare Bereich ist an der Schneidringanordnung so angeordnet, dass er in Anlage mit dem Innengewinde der Überwurfmutter ist, wenn die Schneidringanordnung in die Überwurfmutter eingepresst ist. Der mindestens eine elastisch auslenkbare Bereich ist insbesondere so ausgebildet, dass er beim Einpressen der Schneidringanordnung in die Überwurfmutter durch die Gewindespitzen des Innengewindes radial nach innen ausgelenkt wird und selbsttätig radial nach außen in den Gewindegrund des Innengewindes zurückfedert. Der mindestens eine elastisch in radialer Richtung auslenkbare Bereich ist erfindungsgemäß an einem Ringelement ausgebildet.

Das Ringelement erstreckt sich bevorzugt in Umfangsrichtung insbesondere vollständig um die Schneidringanordnung und ist an einem Außenumfang der Schneidringanordnung angeordnet, so dass das Ringelement zwischen Schneidringanordnung und Überwurfmutter angeordnet ist, wenn die Schneidringanordnung in die Überwurfmutter eingepresst ist.

Das Ringelement und/oder die Schneidringanordnung ist/sind im Bereich des auslenkbaren Bereichs so ausgebildet, dass der elastisch auslenkbare Bereich in radialer Richtung bewegt werden kann. Hierzu ist vorgesehen, dass in radialer Richtung innen ein Freiraum unter dem mindestens einen elastisch auslenkbaren Bereich ausgebildet ist.

Mit anderen Worten: Die Erfindung sieht in ihrem Grundgedanken vor, dass ein Sicherungsmittel zum Verhindern eines Herausfallens einer in eine Überwurfmutter eingepressten Schneidringanordnung nicht durch ein elastisch komprimierbares Element, sondern durch ein elastisch auslenkbares Element realisiert ist, welches eine Bewegung in radialer Richtung ausführen kann und aufgrund der Rückstellkräfte in Richtung des Gewindegrunds zwischen zwei Gewindespitzen in das Innengewinde eingreift. Es kann somit verhindert werden, dass ein Sicherungsmittel beim Einpressen der Schneidringanordnung in die Überwurfmutter vom Innengewinde abgeschert wird. Es ist somit gewährleistet, dass die Schneidringanordnung nach dem herstellerseitigen Einpressen zum Vermeiden einer falschen Reihenfolge der Elemente der Schneidringanordnung und vor dem Verschrauben sicher in der Überwurfmutter gehalten ist und nicht versehentlich verlorengehen kann. Zudem ist sichergestellt, dass nach einer maschinellen Vormontage der Funktionsmutter am Rohr die Überwurfmutter nicht entlang des Rohres verschiebbar ist.

In einer einfachen Ausführungsform kann vorgesehen sein, dass das Ringelement in einem konisch ausgebildeten Bereich der Schneidringanordnung oder bevorzugt in einem zylindrisch ausgebildeten Bereich angeordnet ist.

Erfindungsgemäß ist vorgesehen, dass in der Schneidringanordnung eine umlaufende Nut ausgebildet ist, in der das Ringelement angeordnet ist, wobei besonders bevorzugt der mindestens eine elastisch auslenkbare Bereich in radialer Richtung über eine an die Nut angrenzende Oberfläche der Schneidringanordnung in radialer Richtung übersteht. Mit der Nut ist somit eine Formschlussgestaltung gegeben, mit der eine Bewegung des Ringelements in axialer Richtung zu der Schneidringanordnung unterbunden wird. Lediglich der/die zur Sicherung der Schneidringanordnung in der Überwurfmutter vorgesehene(n) auslenkbare(n) Bereich(e) des Ringelements steht/stehen über die Nut über und somit in Wechselwirkung mit dem Innengewinde der Überwurfmutter. Beim Einpressen der Schneidringanordnung in die Überwurfmutter wird der mindestens eine elastisch auslenkbare Bereich in einen im Bereich der Nut ausgebildeten Freiraum radial nach innen ausgelenkt.

Für eine besonders zuverlässige Sicherung der Schneidringanordnung in der Überwurfmutter sind bevorzugt mehrere auslenkbare Bereiche ausgebildet, die in Umfangsrichtung hintereinander angeordnet sind. Insbesondere sind mindestens zwei, bevorzugt mindestens drei, besonders bevorzugt drei bis fünf elastisch auslenkbare Bereiche insbesondere am Ringelement vorgesehen. Hierbei ist der Abstand zwischen den auslenkbaren Bereichen wesentlich größer als die Breite der auslenkbaren Bereiche in Umfangsrichtung. Der Abstand der auslenkbaren Bereiche ist insbesondere mindestens fünfmal, bevorzugt mindestens zehnmal so groß wie die Breite eines jeden auslenkbaren Bereichs.

In einer einfachen Ausführungsform bestehen das gesamte Ringelement und somit auch der mindestens eine elastisch auslenkbare Bereich insbesondere einteilig aus genau einem Material, insbesondere aus einem Kunststoff oder aus einem Metall.

In einer alternativen Ausführungsform kann vorgesehen sein, dass der elastisch auslenkbare Bereich aus einem anderen Material besteht als die übrigen Bereiche des Ringelements. Ein solches Ringelement kann beispielsweise in einem Zweikomponenten-Spritzgussverfahren hergestellt werden. So kann beispielsweise der elastisch auslenkbare und mit dem Innengewinde der Überwurfmutter in Kontakt kommende Bereich aus einem härteren und/oder verschleißärmeren Material bestehen als das Material des übrigen Bereichs. Es kann auch vorgesehen sein, dass der elastisch auslenkbare Bereich aus einem elastischeren Material besteht als das Material der übrigen Bereiche.

Es kann vorgesehen sein, dass das Ringelement in Umfangsrichtung nicht geschlossen sondern geschlitzt ausgeführt ist. In diesem Fall bildet das Ringelement einen C-Ring aus. Insbesondere in diesem Zusammenhang kann das nicht die auslenkbaren Bereiche ausbildende Material des Ringelements härter ausgebildet sein als das Material, das die auslenkbaren Bereiche ausbildet. Die Ausbildung des Ringelements in einer geschlitzten Ausführung (C-Ring), hat den Vorteil, dass sich das Ringelement beim Aufschieben auf das entsprechende Element der Schneidringanordnung aufweiten kann und somit einfacher in die Nut eingesetzt werden kann.

Insbesondere in diesem Zusammenhang ist bevorzugt, dass der elastisch auslenkbare Bereich symmetrisch, insbesondere spiegel- und/oder rotationssymmetrisch ausgebildet ist. Hierzu kann beispielsweise vorgesehen sein, dass der elastisch auslenkbare Bereich oberhalb einer den Freiraum ausbildenden Aussparung in dem Ringelement angeordnet ist, wobei die den Freiraum definierende Aussparung an allen Seiten von dem Material des Ringelements begrenzt ist, wobei der Freiraum nach unten hin zur Schneidringanordnung offen ausgebildet sein kann. Der elastisch auslenkbare Bereich ist somit an allen Seiten mit dem Ringelement verbunden.

Alternativ kann vorgesehen sein, dass der elastisch auslenkbare Bereich asymmetrisch, insbesondere nicht rotationssymmetrisch, ausgebildet ist.

So kann beispielsweise vorgesehen sein, dass der elastisch auslenkbare Bereich hebelartig ausgebildet ist, wozu ein freies, also nicht mit dem Ringelement direkt verbundenes Ende des auslenkbaren Bereichs auslenkbar ist. Der unterhalb des auslenkbaren Bereichs angeordnete Freiraum ist insbesondere in einer axialen Richtung offen ausgebildet, also nicht von dem Ringelement selbst begrenzt.

Beispielsweise kann der elastisch auslenkbare Bereich eine Art Hebel aufweisen, welcher sich in axialer Richtung erstreckt. Ein solcher Hebel kann spiegelsymmetrisch aber nicht rotationssymmetrisch sein.

Eine solche insbesondere nicht rotationssymmetrische Ausbildung, bezogen auf die Richtung der Auslenkung des elastisch auslenkbaren Bereichs in radialer Richtung, hat den Vorteil, dass der beispielsweise den Hebel aufweisende elastisch auslenkbare Bereich beim Einpressen der Schneidringanordnung in die Überwurfmutter einfach durch die Gewindespitzen radial nach innen ausgelenkt wird und dass der Hebel bei einer Beaufschlagung der Schneidringanordnung mit einer zur Einpressrichtung entgegengesetzten Richtung in dem Gewindegrund des Innengewindes der Überwurfmutter verkeilt und somit ein Herausfallen zusätzlich erschwert.

Wenn die Schneidringanordnung einen Trägerring und einen separaten Schneidring aufweist, ist bevorzugt, dass das Ringelement auf einem Außenumfang des Trägerrings oder ggf. in einer im Trägerring ausgebildeten Nut angeordnet ist.

In einer Ausführungsform kann vorgesehen sein, dass zusätzlich zu dem Ringelement eine insbesondere ringförmige Dichtung an dem Trägerring angebracht ist. Die Dichtung kann beispielsweise in einer (weiteren) umlaufenden Nut am Trägerring angebracht sein, wobei die Dichtung auf einer radial innen oder radial außen liegenden Seite am Dichtungsträger angebracht bzw. angeordnet sein kann, so dass die Dichtung zwischen Trägerring und Verschraubungskörper oder Innengewinde der Überwurfmutter oder zwischen Trägerring und Rohr oder Schlaucharmatur angeordnet ist.

In einer bevorzugten Ausführungsform ist die Dichtung an einem dem Verschraubungskörper zugewandten Ende des Trägerrings angeordnet, wobei die Dichtung von dem Trägerring axial in Richtung des Verschraubungskörpers vorsteht, so dass die Dichtung im montierten Zustand der Verschraubung zwischen Rohr und Verschraubungskörper angeordnet ist. Insbesondere in diesem Zusammenhang kann vorgesehen sein, dass die Dichtung formschlüssig, beispielsweise mittels einer Rastverbindung, an dem Trägerring angebracht ist. Die Dichtung kann somit unabhängig von dem Trägerring hergestellt werden und ist somit nicht an den Trägerring angespritzt. Vielmehr wird die Dichtung durch die Rastverbindung sicher am Trägerring gehalten.

Die Erfindung sowie das technische Umfeld werden im Folgenden anhand der Figuren beispielhaft erläutert. Es zeigen schematisch
- Figur 1:: eine Schnittansicht durch eine Überwurfmutter und eine Schneidringanordnung,
- Figur 2:: eine Schnittansicht durch die aus der Überwurfmutter und der Schneidringanordnung bestehende Funktionsmutter,
- Figur 3:: eine Detailansicht der Funktionsmutter im Bereich des Innengewindes der Überwurfmutter,
- Figur 4:: eine Schnittansicht eines Trägerrings mit einem Ringelement,
- Figur 5:: ein Ringelement,
- Figur 6:: eine Schnittansicht durch eine weitere Ausführungsform einer Funktionsmutter,
- Figur 7:: eine Schnittansicht durch noch eine weitere Ausführungsform einer Funktionsmutter und
- Figur 8:: eine Rohrverschraubung mit der Funktionsmutter.

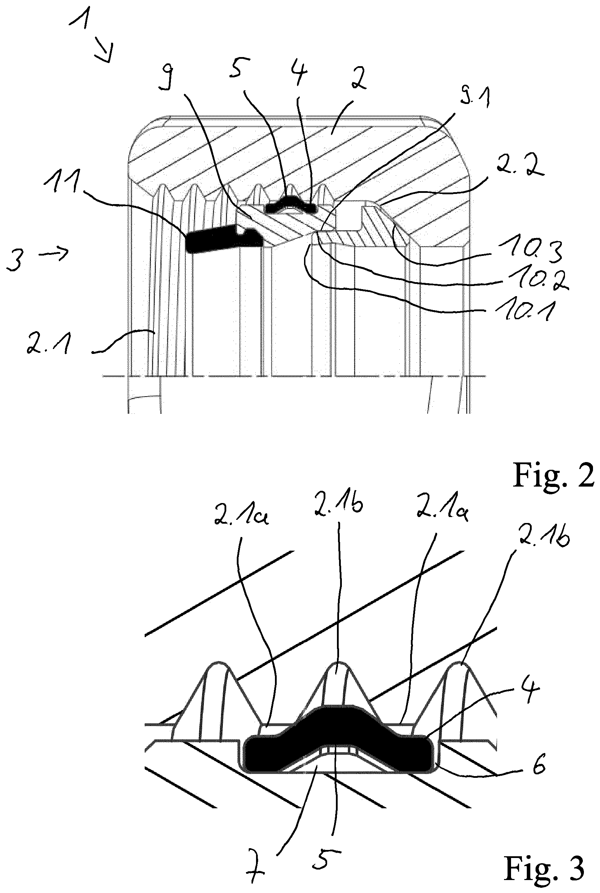

Die vorliegende Erfindung betrifft eine Funktionsmutter 1, wie sie in den Figuren 2, 6 und 7 jeweils in einer teilweisen Schnittansicht dargestellt ist.

Die Funktionsmutter 1 umfasst eine Überwurfmutter 2 mit einem Innengewinde 2.1 und einem Innenkonus 2.2 am Ende des Innengewindes 2.1. Die Funktionsmutter 1 umfasst zudem einen Schneidringanordnung 3.

Die Schneidringanordnung 3 gemäß den in den Figuren 2, 6 und 7 dargestellten Ausführungsformen umfasst einen Schneidring 10 sowie einen Trägerring 9.

Der Schneidring 10 weist eine Schneidringkante 10.1 an seinem vorderen Ende auf. Zudem weist der Schneidring 10 einen hinteren Außenkonus 10.2 und einen vorderen Außenkonus 10.3 auf. Der hintere Außenkonus 10.2 ist beim Anziehen der Funktionsmutter 1 in Anlage mit dem Innenkonus 2.2 der Überwurfmutter 2.

Der Trägerring 9 weist einen hinteren Innenkonus 9.1 auf, in den der Schneidring 10 mit seinem vorderen Außenkonus 10.3 eingesteckt ist. An seinem vorderen Ende trägt der Trägerring 9 eine Dichtung 11. Die Dichtung 11 ist mittels einer Schnappverbindung an dem Trägerring 9 angebracht. Hierzu weist der Trägerring 9 an seinem vorderen Ende eine Formschlussgestaltung auf, die mit einer komplementären Formschlussgestaltung an einem hinteren Ende der Dichtung 11 korrespondiert, so dass die Dichtung 11 an dem Trägerring 9 angebracht werden kann.

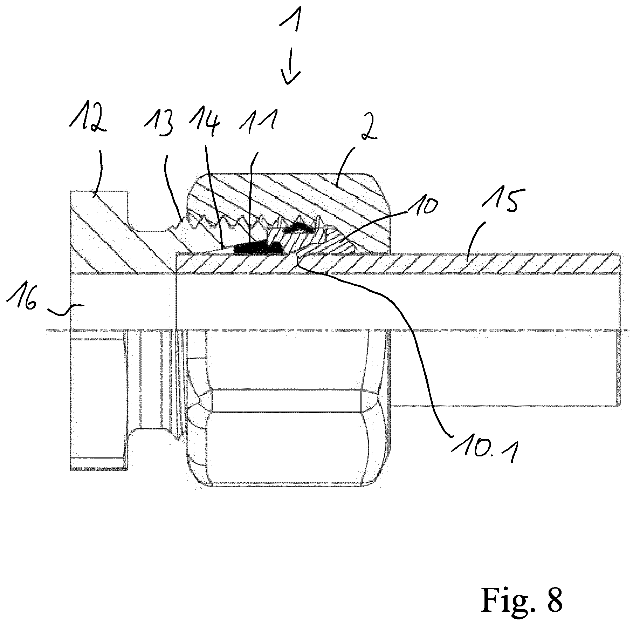

In einem an einem Verschraubungskörper 12 montierten Zustand ist die Dichtung 11 zumindest abschnittsweise zwischen dem Verschraubungskörper 12 und einem durch die Schneidringanordnung 3 hindurchgesteckten Rohr 15 angeordnet (siehe Figur 8).

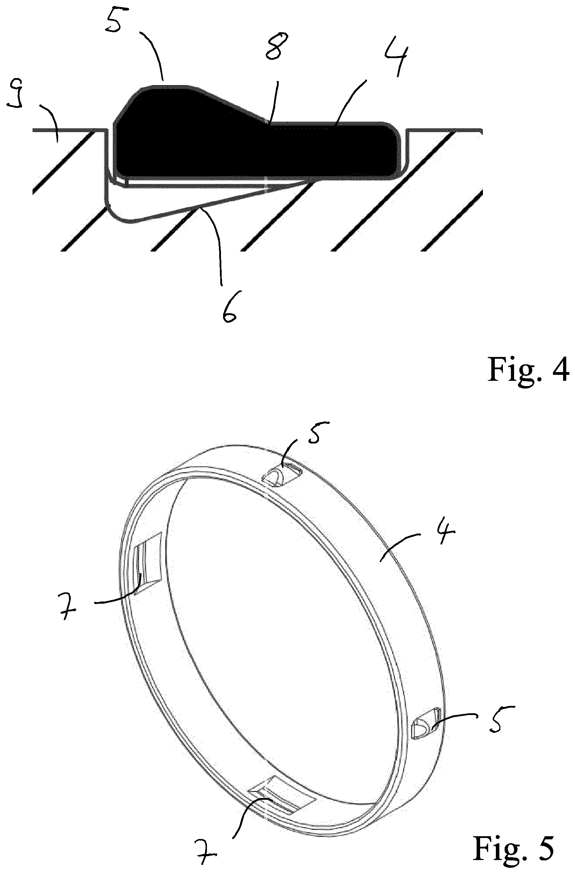

Auf seinem Außenumfang weist der Trägerring 9 (siehe beispielsweise auch Figuren 3 und 4) eine Nut 6 auf, in der ein Ringelement 4 angeordnet ist.

Das insbesondere aus einem Kunststoff bestehende Ringelement 4 weist mehrere in seiner Umfangsrichtung hintereinander angeordnete auslenkbare Bereiche 5 auf. In radialer Richtung (bezogen auf den Trägerring 9) ist unterhalb jedes elastisch auslenkbaren Bereichs 5 ein Freiraum 7 ausgebildet (siehe insbesondere Figuren 3, 4 und 5).

Zur Montage der Funktionsmutter 1 wird die Schneidringanordnung 3 in axialer Richtung in die Überwurfmutter 2 eingepresst. Bei diesem Einpressvorgang werden die elastisch auslenkbaren Bereiche 5 des Ringelements 4 durch die Gewindespitzen 2.1a des Innengewindes 2.1 der Überwurfmutter 2 radial nach innen in Richtung des Freiraums 7 ausgelenkt. Die elastisch auslenkbaren Bereiche 5 federn beim weiteren Einpressen aufgrund ihrer Elastizität zurück in Richtung des Gewindegrunds 2.1b (siehe beispielsweise Figur 3). Der Radius des durch die auslenkbaren Bereiche 5 definierten Kreises im unausgelenkten Zustand ist also größer als der Radius der Gewindespitzen 2.1a.

Durch die Ausbildung des mindestens einen elastisch auslenkbaren Bereichs 5 und eines darunter angeordneten Freiraums 7 kann ein von dem elastisch auslenkbaren Bereich umfasster Vorsprung ohne eine Kompression den Gewindespitzen 2.1a beim Einpressen ausweichen, so dass ein Abscheren verhindert wird.

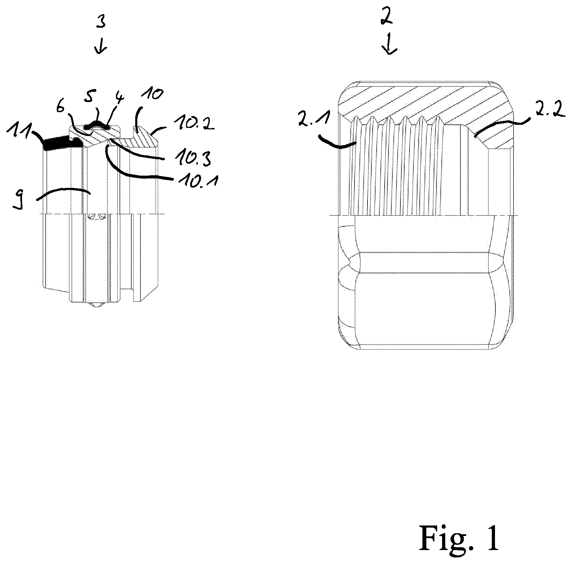

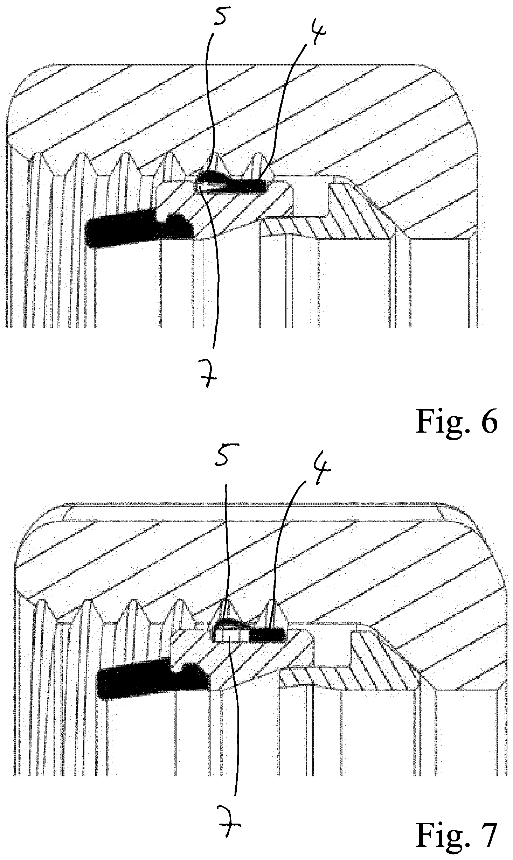

Während bei den Ausführungsformen der Figuren 1 bis 3 und 5 der unter dem elastisch auslenkbaren Bereich 5 angeordnete Freiraum 7 radial nach innen von dem Trägerring 9 begrenzt wird, ist bei der Ausführungsform der Figur 6 das Ringelement 4 im Bereich des elastisch auslenkbaren Bereichs 5 so geformt, dass der Freiraum 7 auch radial nach innen von dem Ringelement 4 begrenzt wird.

Während bei den Ausführungsformen der Figuren 5 und 6 der elastisch auslenkbare Bereich 5 als Hebel 8 und der Freiraum 7 in axialer Richtung einseitig offen ausgebildet ist, ist bei den Ausführungsformen der Figuren 1 bis 3 und 5 der elastisch auslenkbare Bereich 5 rotationssymmetrisch ausgebildet und der Freiraum 7 unterhalb des elastisch auslenkbaren Bereichs 5 in Umfangsrichtung und in axialer Richtung (bezogen auf den Trägerring 9) geschlossen. Gemäß der Ausführungsform der Figur 7 ist der elastisch auslenkbare Bereich 5 aus einem elastischeren Material geformt als die übrigen Bereiche des Ringelements 4.

In Figur 8 ist die Rohrverschraubung mit der Funktionsmutter 1 gezeigt. Es ist zu erkennen, dass das Rohr 15 durch die Funktionsmutter 1 hindurch in eine Aufnahme 14 des eine Bohrung 16 aufweisenden Verschraubungskörpers 12 eingesteckt ist. Durch Anziehen der Überwurfmutter 2 auf das Außengewinde 13 des Verschraubungskörpers 12 schneidet der Schneidring 10 mit seiner Schneidringkante 10.1 in das Rohr 15 ein. In dem angezogenen Zustand ist die Dichtung 11 in der Aufnahme 14 und somit zwischen Verschraubungskörper 12 und Rohr 15 angeordnet.

### Bezugszeichenliste

- 1: Funktionsmutter
- 2: Überwurfmutter
- 2.1: Innengewinde
- 2.1a: Gewindespitze
- 2.1b: Gewindegrund
- 2.2: Innenkonus
- 3: Schneidringanordnung
- 4: Ringelement
- 5: Auslenkbarer Bereich
- 6: Nut
- 7: Freiraum
- 8: Hebel
- 9: Trägerring
- 9.1: Hinterer Innenkonus
- 10: Schneidring
- 10.1: Schneidringkante
- 10.2: Hinterer Außenkonus
- 10.3: Vorderer Außenkonus
- 11: Dichtung
- 12: Verschraubungskörper
- 13: Außengewinde
- 14: Aufnahme
- 15: Rohr
- 16: Bohrung

## Patentansprüche

1. Funktionsmutter (1) für eine Rohr- oder Schlauchverschraubung, mit
- einer Überwurfmutter (2), wobei die Überwurfmutter (2) ein Innengewinde (2.1) zum Aufschrauben auf ein Außengewinde (13) eines Verschraubungskörpers (12) aufweist,
- einer Schneidringanordnung (3) und
- mindestens einem Sicherungselement an einem Außenumfang der Schneidringanordnung (3),
wobei ein Rohr (15) oder eine Schlaucharmatur durch die Funktionsmutter (1) steckbar ist, wobei
das Sicherungselement durch einen elastisch in radialer Richtung auslenkbaren Bereich (5) ausgebildet ist und wobei der mindestens eine elastisch auslenkbare Bereich (5) an einem Ringelement (4) ausgebildet ist,
wobei in der Schneidringanordnung (3) eine umlaufende Nut (6) ausgebildet ist, in der das Ringelement (4) angeordnet ist, **dadurch gekennzeichnet, dass** beim Einpressen
der Schneidringanordnung (3) in die Überwurfmutter (2) der mindestens eine elastisch auslenkbare Bereich (5) in einen im Bereich der Nut (6) ausgebildeten Freiraum (7) radial nach innen ausgelenkt wird.

2. Funktionsmutter (1) nach Anspruch 1, wobei der mindestens eine elastisch auslenkbare Bereich (5) in radialer Richtung über eine an die Nut (6) angrenzende Oberfläche der Schneidringanordnung (3) in radialer Richtung übersteht.

3. Funktionsmutter (1) nach Anspruch 1 oder 2, wobei der elastisch auslenkbare Bereich (5) aus einem anderen Material besteht als die übrigen Bereiche des Ringelements (4).

4. Funktionsmutter (1) nach einem der vorhergehenden Ansprüche, wobei mehrere in Umfangsrichtung hintereinander angeordnete elastisch auslenkbare Bereiche (5) vorgesehen sind.

5. Funktionsmutter (1) nach einem der vorhergehenden Ansprüche, wobei der elastisch auslenkbare Bereich (5) symmetrisch ausgebildet ist.

6. Funktionsmutter (1) nach einem der Ansprüche 1 bis 4, wobei der elastisch auslenkbare Bereich (5) hebelartig ausgebildet ist.

7. Funktionsmutter (1) nach Anspruch 6, wobei sich der Hebel (8) in axialer Richtung erstreckt.

8. Funktionsmutter (1) nach einem der vorhergehenden Ansprüche, wobei beim Einpressen der Schneidringanordnung (3) in die Überwurfmutter (2) der elastisch auslenkbare Bereich (5) durch Gewindespitzen (2.1a) des Innengewindes (2.1) der Überwurfmutter (2) radial nach innen ausgelenkt wird und selbsttätig radial nach außen in den Gewindegrund (2.1b) des Innengewindes (2.1) der Überwurfmutter (2) zurückfedert.

9. Funktionsmutter (1) nach einem der vorhergehenden Ansprüche, wobei die Schneidringanordnung (3) einen Trägerring (9) und einen separaten, eine Schneidkante (10.1) ausbildenden Schneidring (10) aufweist, wobei der mindestens eine elastisch auslenkbare Bereich (5) auf einem Außenumfang des Trägerrings (9) angeordnet ist, wobei bevorzugt der Trägerring (9) im hinteren Bereich einen hinteren Innenkonus (9.1) aufweist, wobei der separate Schneidring (10) innerhalb des hinteren Innenkonus (9.1) angeordnet ist.

10. Funktionsmutter (1) nach Anspruch 9, wobei eine Dichtung (11) an dem Trägerring (9) angebracht ist.

11. Funktionsmutter (1) nach Anspruch 10, wobei die Dichtung (11) mittels einer Rastverbindung an dem Trägerring (9) an einem dem Verschraubungskörper zugewandten Ende angebracht ist.

12. Rohr- oder Schlauchverschraubung, mit einem Verschraubungskörper (12), wobei der Verschraubungskörper eine Bohrung (16) zur Durchleitung eines Mediums und ein Außengewinde (13) aufweist, und einer Funktionsmutter (1) nach einem der vorhergehenden Ansprüche.

13. Verschraubung nach Anspruch 12, wobei ein Schneidring (10) einen hinteren Außenkonus (10.2) an seinem den vorderen Außenkonus (10.3) abgewandten Ende aufweist, wobei zumindest während des Anziehens der Überwurfmutter (2) ein Innenkonus (2.2) der Überwurfmutter (2) an dem hinteren Außenkonus (10.2) des Schneidrings (10) anliegt.

## Claims

1. Functional nut (1) for a pipe or hose screw connection, with
- a union nut (2), wherein the union nut (2) has an internal thread (2.1) for screwing onto an external thread (13) of a screw connecting body (12),
- a cutting ring assembly (3) and
- at least one locking element on an outer circumference of the cutting ring assembly (3),
wherein a pipe (15) or a hose fitting can be inserted through the functional nut (1), wherein
the locking element is formed by a region (5) that can be deflected elastically in the radial direction, and wherein the at least one elastically deflectable area (5) is formed on a ring element (4), wherein
a circumferential groove (6) is formed in the cutting ring assembly (3), in which the ring element (4) is arranged, **characterized in that** when the cutting ring assembly (3) is pressed into the union nut (2) the at least one elastically deflectable area (5) is deflected radially inwards into a free space (7) formed in the region of the groove (6).

2. Functional nut (1) according to Claim 1, wherein the at least one elastically deflectable area (5) protrudes radially above a surface of the cutting ring assembly (3) radially adjacent to the groove (6).

3. Functional nut (1) according to Claim 1 or 2, wherein the elastically deflectable area (5) is made of a different material than the other areas of the ring element (4).

4. Functional nut (1) according to any one of the preceding claims, wherein several elastically deflectable areas (5) are provided, arranged one behind the other in the circumferential direction.

5. Functional nut (1) according to any one of the preceding claims, wherein the elastically deflectable area (5) is of symmetrical design.

6. Functional nut (1) according to any one of Claims 1 to 4, wherein the elastically deflectable area (5) is designed in the form of a lever.

7. Functional nut (1) according to Claim 6, wherein the lever (8) extends in axial direction.

8. Functional nut (1) according to any one of the preceding claims, wherein when the cutting ring assembly (3) is pressed into the union nut (2) the elastically deflectable area (5) is deflected radially inwards by thread crests (2.1a) of the internal thread (2.1) of the union nut (2) and automatically springs back radially outwards into the thread root (2.1b) of the internal thread (2.1) of the union nut (2).

9. Functional nut (1) according to any one of the preceding claims, wherein the cutting ring assembly (3) comprises a carrier ring (9) and a separate cutting ring (10) forming a cutting edge (10.1), wherein the at least one elastically deflectable area (5) is arranged on an outer circumference of the carrier ring (9), wherein the carrier ring (9) preferably has a rear inner taper (9.1) in the rear area, wherein the separate cutting ring (10) is arranged inside the rear inner taper (9.1).

10. Functional nut (1) according to Claim 9, wherein a seal (11) is attached to the carrier ring (9).

11. Functional nut (1) according to Claim 10, wherein the seal (11) is attached to an end closest to the screw connecting body by means of a detent connection on the carrier ring (9).

12. Pipe or hose fitting with a screw connecting body (12), wherein the connecting body has a bore (16) to allow the passage of a medium, and an external thread (13), and a functional nut (1) according to any one of the preceding claims.

13. Screw fitting according to Claim 12, wherein a cutting ring (10) has a rear outer taper (10.2) on the end thereof farthest from the front outer taper (10.3), wherein an inner taper (2.2) of the union nut (2) bears against the rear outer taper (10.2) of the cutting ring (10) at least during tightening of the union nut (2).

## Revendications

1. Ecrou fonctionnel (1) pour un raccord à vis pour tubes ou flexibles, avec
- un écrou-chapeau (2), sachant que l'écrou-chapeau (2) comporte un filetage intérieur (2.1) à visser sur un filetage extérieur (13) d'un corps de raccord à vis (12),
- un système de bague coupante (3) et
- au moins un élément de fixation sur une périphérie extérieure du système de bague coupante (3),
sachant qu'un tube (15) ou un élément de robinetterie pour flexible peut être emboîté à travers l'écrou fonctionnel (1), sachant que l'élément de fixation est constitué par une zone pouvant être élastiquement déviée (5) dans la direction radiale et sachant qu'au moins une zone pouvant être élastiquement déviée (5) est constituée sur un élément annulaire (4),
sachant qu'une rainure (6) périphérique est constituée dans le système de bague coupante (3) dans laquelle est disposé un élément annulaire (4), **caractérisé en ce qu'**en enfonçant le système de bague coupante (3) dans l'écrou-chapeau (2), au moins la zone pouvant être élastiquement déviée (5) est radialement déviée vers l'intérieur dans un espace libre (7) constitué dans la zone de la rainure (6).

2. Ecrou fonctionnel (1) selon la revendication 1,
sachant qu'au moins une zone pouvant être élastiquement déviée (5) dépasse dans la direction radiale sur une surface adjacente à la rainure (6) du système de bague coupante (3) dans la direction radiale.

3. Ecrou fonctionnel (1) selon la revendication 1 ou 2,
sachant que la zone pouvant être élastiquement déviée (5) est composée d'un autre matériau que les autres zones de l'élément annulaire (4).

4. Ecrou fonctionnel (1) selon l'une quelconque des revendications précédentes, sachant que plusieurs zones pouvant être élastiquement déviées (5) disposées les unes derrière les autres dans le sens périphérique sont prévues.

5. Ecrou fonctionnel (1) selon l'une quelconque des revendications précédentes, sachant que la zone pouvant être élastiquement déviée (5) est constituée de façon symétrique.

6. Ecrou fonctionnel (1) selon l'une quelconque des revendications 1 à 4, sachant que la zone pouvant être élastiquement déviée (5) est constituée à la façon d'un levier.

7. Ecrou fonctionnel (1) selon la revendication 6, sachant que le levier (8) s'étend dans la direction axiale.

8. Ecrou fonctionnel (1) selon l'une quelconque des revendications précédentes, sachant qu'en enfonçant le système de bague coupante (3) dans l'écrou-chapeau (2), la zone pouvant être élastiquement déviée (5) est déviée radialement vers l'intérieur par des sommets de filets (2.1a) du filetage intérieur (2.1) de l'écrou-chapeau (2) et revient automatiquement en détente radialement vers l'extérieur dans le fond de filetage (2.1b) du filetage intérieur (2.1) de l'écrou-chapeau (2).

9. Ecrou fonctionnel (1) selon l'une quelconque des revendications précédentes, sachant que le système à bague coupante (3) comporte une bague de support (9) et une bague coupante (10) séparée constituant une arête coupante (10.1), sachant qu'au moins une zone pouvant être élastiquement déviée (5) est disposée sur une périphérie extérieure de la bague de support (9), sachant de préférence que la bague de support (9) comporte dans la zone arrière un cône intérieur arrière (9.1), sachant que la bague coupante séparée (10) est disposée à l'intérieur du cône intérieur arrière (9.1).

10. Ecrou fonctionnel (1) selon la revendication 9,
sachant qu'un joint d'étanchéité (11) est monté sur la bague de support (9).

11. Ecrou fonctionnel (1) selon la revendication 10,
sachant que le joint d'étanchéité (11) est monté au moyen d'une liaison à d'encliquetage sur la bague de support (9) à une extrémité tournée vers le corps de raccord à vis.

12. Raccord à vis pour tubes ou flexibles avec un
corps de raccord à vis (12), sachant que le
corps de raccord à vis comporte un alésage (16) pour le passage dirigé d'un milieu et un filetage extérieur (13), et un écrou fonctionnel (1) selon l'une quelconque des revendications précédentes.

13. Raccord à vis selon la revendication 12, sachant qu'une bague coupante (10) comporte un cône extérieur arrière (10.2) à son extrémité opposée au cône extérieur avant (10.3), sachant qu'au moins pendant le serrage de l'écrou-chapeau (2), un cône intérieur (2.2) de l'écrou-chapeau (2) vient adhérer au cône extérieur arrière (10.2) de la bague coupante (10).
